# EUROPÄISCHE PATENTSCHRIFT

(11) **EP 2 635 475 B1**
(45) Veröffentlichungstag und Bekanntmachung des Hinweises auf die Patenterteilung: **21.02.2018**
(21) Anmeldenummer: 11767639.5
(22) Anmeldetag: 08.10.2011
(51) Int. Cl.: B60T 15/00, B60T 13/68, B60T 17/04

(54) **VENTILEINRICHTUNG, BREMSANLAGE UND FAHRZEUG**
VALVE ARRANGEMENT, BRAKE SYSTEM AND VEHICLE
DISPOSITIF DE VALVES, SYSTÈME DE FREINAGE ET VÉHICULE

(30) Priorität: 05.11.2010 DE 102010050580
(43) Veröffentlichungstag der Anmeldung: 11.09.2013
(73) Patentinhaber: WABCO GmbH, 30453 Hannover (DE)
(72) Erfinder: KIEL, Bernd-Joachim, 31515 Wunstorf (DE); ROSENDAHL, Hartmut, 30167 Hannover (DE); ROTERS, Gerd, 31515 Wunstorf (DE); STRACHE, Wolfgang, 30966 Hemmingen (DE); STRUWE, Otmar, 30519 Hannover (DE)
(74) Vertreter: Lauerwald, Jörg
(86) Internationale Anmeldenummer: PCT/EP2011/005038
(87) Internationale Veröffentlichungsnummer: WO 2012/059163

(56) Entgegenhaltungen:
- EP-A1- 1 733 943
- WO-A1-2008/025401
- WO-A2-2009/019022
- DE-A1-102008 048 562

## Beschreibung

Die Erfindung betrifft eine Ventileinrichtung zur Bremssteuerung einer druckmittelbetriebenen Bremsanlage eines Fahrzeugs, eine derartige Bremsanlage mit dieser Ventileinrichtung und ein Fahrzeug mit dieser Ventileinrichtung bzw. mit dieser Bremsanlage.

Druckmittelbetriebene Bremsanlagen werden insbesondere für Nutzfahrzeuge eingesetzt. Als Druckmittel wird dabei vorzugsweise Druckluft verwendet. Zum Betätigen einer Betriebsbremse des Fahrzeugs oder zum Lösen einer Feststellbremse des Fahrzeugs wird elektropneumatisch und/oder pneumatisch ein Steuerdruck ausgesteuert und mittels eines Relaisventils luftmengenverstärkt bzw. mit einer größeren Druckmittelmenge bereitgestellt. Das Relaisventil ist dabei Teil der Ventileinrichtung und vorzugsweise in einem Gehäuse der Ventileinrichtung angeordnet.

Vom Relaisventil wird das druckmittelmengenverstärkte Druckmittel wenigstens einem Bremszylinder zum Abbremsen wenigstens eines Rades des Fahrzeugs oder einem Federspeicherteil eines kombinierten Federspeicherbremszylinders zum Lösen einer Feststellbremse an wenigstens einem Rad des Fahrzeugs zugeleitet.

Für unterschiedliche Bremssysteme sind verschiedene Ventileinrichtungen bekannt. Insbesondere ist eine Ventileinrichtung bekannt, welcher der Steuerdruck an einem Eingang von außen zugeführt wird. Bspw. wird der Steuerdruck in diesem Fall rein pneumatisch mittels eines Fußbremspedals ausgesteuert.

Eine weitere Ventileinrichtung für eine elektropneumatische Bremseinrichtung zur Steuerung einer Feststellbremse eines Fahrzeugs ist in WO 2008/025 401 A1 gezeigt.

Eine andere bekannte Ventileinrichtung verwendet einen derartigen mittels eines Fußbremspedals ausgesteuerten Bremsdruck als Redundanzdruck und führt diesen Redundanzdruck bei einem Elektronikausfall dem Relaisventil als Steuerdruck zu. Diese bekannte Ventileinrichtung weist ferner mehrere Elektromagnetventile auf, mittels denen der Steuerdruck im Normalfall ausgesteuert wird.

Die in Abhängigkeit vom verwendeten Bremssystem unterschiedlich ausgestalteten bekannten Ventileinrichtungen können unterschiedliche Ventile und unterschiedliche Gehäuse mit unterschiedlichen Druckmittelkanälen aufweisen. Insbesondere sind die bekannten Ventileinrichtungen unterschiedlich ausgebildet als Relaismodulator für eine elektropneumatische Feststellbremse, als Relaismodulator für ein elektronisch geregeltes Bremssystem, als Relaismodulator für ein pneumatisches Bremssystem mit Antiblockierfunktion und/oder Antriebsschlupfregelung, als Elektromagnetrelaisventil oder als Relaisventil. Von diesen unterschiedlichen Ausgestaltungen sind zudem jeweils unterschiedliche Varianten für unterschiedliche Einsatzzwecke und/oder Funktionen bekannt.

Für die bekannten Ventileinrichtungen müssen speziell für die jeweilige Ventileinrichtung vorgesehene Halterungen am Fahrzeug vorgesehen werden. Dies macht das Ausrüsten von Fahrzeugen mit unterschiedlichen Bremssystemen aufwändig und teuer. Zudem muss eine Vielzahl unterschiedlicher Gehäuse produziert werden, was zu kleinen Stückzahlen und folglich hohen Kosten bei einer Fertigung der bekannten Ventileinrichtungen führt.

Aus DE 10 2008 048 562 A1 ist eine Ventilanordnung ohne Relaisventil mit mehreren Ventileinrichtungen zur Bremssteuerung einer pneumatischen Bremsanlage eines Fahrzeugs, insbesondere Schienenfahrzeugs, bekannt. Die Ventileinrichtungen dieser Ventilanordnung sind als blockförmige Trägermodule mit gleichen Höhen- und Tiefenabmessungen ausgebildet. Die Ventileinrichtungen sind miteinander verbunden und weisen Bohrungen auf, die gemeinsam sich durch die Ventileinrichtung hindurch erstreckende Längskanäle bilden. Ferner weisen diese Ventileinrichtungen eine Einheitsbohrung zur Aufnahme jeweils eines Patronenventils auf. Als Patronenventile werden unterschiedliche Steuerventile für unterschiedliche Ventilfunktionen vorgesehen. Zur Anpassung an die unterschiedlichen Ventilfunktionen wird eine Kanalführung in der Ventileinrichtung durch Einbringen von Stopfenelementen in abzusperrende Druckmittelkanäle angepasst. Es müssen bei diesen bekannten Ventileinrichtungen aufwändig Stopfenelemente genau und derart positioniert werden, dass sie in ihrer Lage dauerhaft positioniert bleiben. Andernfalls wäre eine gewollte Funktionsweise der jeweiligen Ventileinrichtung beeinträchtigt, die jedoch bei den o.g. Ventileinrichtungen für Nutzfahrzeuge gewünscht bzw. erforderlich ist. Es erscheint daher unvorteilhaft, eine mittels Stopfenelementen veränderbare Luftführung bzw. Druckmittelführung bei den o.g. Ventileinrichtungen mit Relaisventil vorzusehen.

Nach alledem liegt der Erfindung die Aufgabe zugrunde, eine verbesserte Ventileinrichtung mit Relaisventil und eine Bremsanlage mit dieser Ventileinrichtung sowie ein Fahrzeug mit dieser Ventileinrichtung bereitzustellen.

Die Erfindung löst diese Aufgabe mit einer Ventileinrichtung nach Anspruch 1. Ferner löst die Erfindung die Aufgabe mit einer Bremsanlage nach Anspruch 14, welche eine derartige Ventileinrichtung zur Bremssteuerung dieser Bremsanlage aufweist, zum Abbremsen oder Feststellen eines Fahrzeugs mittels druckmittelbetriebener Bremszylinder. Schließlich löst die Erfindung die Aufgabe mit einem Fahrzeug, insbesondere Nutzfahrzeug, nach Anspruch 15 mit einer derartigen Ventileinrichtung zur Bremssteuerung einer Bremsanlage dieses Fahrzeugs und/oder mit der erfindungsgemäßen Bremsanlage zum Abbremsen oder Feststellen dieses Fahrzeugs.

Die erfindungsgemäße Ventileinrichtung ist zur Bremssteuerung einer druckmittelbetriebenen Bremsanlage eines Fahrzeugs vorgesehen. Die Ventileinrichtung weist ein Gehäuse auf, das seinerseits mehrere Druckmittelkanäle aufweist. Die Druckmittelkanäle sind insbesondere Bohrungen im Gehäuse. In den Druckmittelkanälen befindet sich ein Druckmittel, vorzugsweise Luft, das durch die Druckmittelkanäle geleitet werden kann. In Einrichtungen, die pneumatisch mit einem selben Druckmittelkanal verbunden sind, stellt sich zumindest nach einer endlichen Zeitdauer ein selber Druck ein. Die Druckmittelkanäle dienen daher zur Druckweiterleitung, Entlüftung und/oder Belüftung. Weiter weist die Ventileinrichtung ein Relaisventil auf, das einen pneumatischen Steuerdruck, der diesem Relaisventil durch wenigstens einen der Druckmittelkanäle zugeleitet wird, mit einer größeren Druckmittelmenge bereitstellt.

Zudem weist die Ventileinrichtung wenigstens einen Einsatz, bspw. einen Ventilblock, auf, der pneumatisch mit zwei oder mehreren der Drückmittelkanäle verbunden ist. Druckmittel kann deshalb von einem ersten Druckmittelkanal durch den Einsatz zu einem zweiten Druckmittelkanal strömen, so dass diese beiden Druckmittelkanäle durch den Einsatz bzw. durch den Ventilblock pneumatisch miteinander verbunden oder verbindbar sind. Zwei Druckmittekanäle gelten dabei als pneumatisch miteinander verbunden, wenn sich nach einer endlichen Zeit in diesen beiden Druckmittelkanälen derselbe Druck einstellt.

Die Anordnung dieser zwei pneumatisch durch den Einsatz miteinander verbundenen oder verbindbaren Druckmittelkanäle einschließlich der pneumatischen Verbindung dieser zwei Druckmittelkanäle durch diesen Einsatz wird in der vorliegenden Beschreibung Druckmittelweg genannt. Dabei kann der Druckmittelweg ggf. weitere pneumatisch mit wenigstens einem dieser beiden Druckmittelkanäle verbundene Druckmittelkanäle oder andere Druckmitteleinrichtungen aufweisen. Somit definieren zumindest diese zwei miteinander verbundenen oder verbindbaren Druckmittelkanäle und deren pneumatische Verbindung oder Verbindungsmöglichkeit durch den Einsatz zusammen den Druckmittelweg. Die Ventileinrichtung kann einen oder mehrere derartiger Druckmittelwege aufweisen.

Zwei Gehäuse eines selben Gehäusetyps bei denen zumindest einer dieser beiden Druckmittelkanäle unterschiedlich gegenüber dem entsprechenden Druckmittelkanal des anderen Gehäuses angeordnet ist, weisen somit beispielsweise unterschiedliche Druckmittelwege auf. Unterschiedliche Druckmittelwege können auch gegeben sein, wenn der Einsatz bzw. der Ventilblock beispielsweise bei einer ersten Ventileinrichtung einen ersten mit einem zweiten Druckmittelkanal pneumatisch verbindet, jedoch bei einer zweiten Ventileinrichtung den ersten mit einem dritten Druckmittelkanal pneumatisch verbindet. Der im jeweiligen Fall nicht zum Druckmittelweg gehörende dritte bzw. zweite Druckmittelkanal kann jeweils entfallen, eine andere Funktion aufweisen oder unbenutzt sein.

Die Erfindung sieht vor, dass das Gehäuse der Ventileinrichtung aus einem Satz von im Wesentlichen gleichen Gehäusen mit unterschiedlichen Druckmittelkanälen auswählbar ist und der oder die Einsätze aus einem Satz von im Wesentlichen äußerlich gleich ausgebildeten Einsätzen, jedoch mit unterschiedlichen Luttführungen auswählbar ist bzw. sind.

Die erfindungsgemäße Ventileinrichtung weist somit gegenüber weiteren Ventileinrichtungen mit einer anderen Funktion ein Gehäuse eines selben Gehäusetyps bzw. ein gleiches oder im Wesentlichen gleiches Gehäuse auf, das kostengüns-tig in großen Stückzahlen für alle diese Ventileinrichtungen produziert werden kann. Insbesondere kann eine selbe oder gleiche Gussform zum Gießen dieser Gehäuse des gleichen Gehäusetyps verwendet werden. Druckmittelkanäle, insbesondere Bohrlöcher, die nach dem Gießen in das jeweilige Gehäuse eingebracht werden, können ebenfalls gleich sein oder sich bei den unterschiedlichen Ventileinrichtungen unterscheiden. Gehäuse mit unterschiedlichen Druckmittelkanälen und/oder mit unterschiedlichen Gehäusedeckeln werden dabei als im Wesentlichen gleich angesehen, wenn sie ansonsten gleich sind oder sich nur unwesentlich unterscheiden. Insbesondere werden Gehäuse eines selben Gehäusetyps unbeachtlich ihrer Bohrlöcher und unbeachtlich der Ausgestaltung des Gehäusedeckels als im Wesentlichen gleich angesehen.

Die erfindungsgemäße Aufgabe wird weiter dadurch gelöst, dass für eine jeweils gewünschte Funktion der jeweiligen Ventileinrichtung entweder ein Gehäuse mit Druckmittelkanälen speziell für diese Funktion vorgesehen wird, wobei der Einsatz gegenüber den Ventileinrichtungen mit gleichem Gehäuse aber anderer Funktion ein gleicher oder ein unterschiedlicher Einsatz sein kann. Alternativ weist das Gehäuse mehrere Druckmittelkanäle für unterschiedliche Funktionen auf, die in Abhängigkeit von der gewünschten Funktion genutzt werden, wobei der jeweils gewählte Einsatz bestimmt, welche Druckmittelkanäle tatsächlich genutzt werden und wie diese Druckmittelkanäle genutzt werden. Somit erhält die Ventileinrichtung in Abhängigkeit des ausgewälten Grehäuses und/oder in Abhängigheit des ausgewählten EinSatzes eine entsprechende Funktion.

Im Detail verläuft daher der Druckmittelweg aufgrund eines jeweils ausgewählten Gehäuses, das aus einem Satz von mehrere, unterschiedliche Druckmittelkanäle, insbesondere Bohrungen, aufweisenden, ansonsten jedoch gleichen oder im Wesentlichen gleichen Gehäusen ausgewählt ist, in Abhängigkeit von diesem jeweils ausgewählten Gehäuse unterschiedlich.

Alternativ oder zusätzlich ist der Druckmittelweg aufgrund eines jeweils ausgewählten Einsatzes, der aus einem Satz von mehreren unterschiedlichen Einsätzen ausgewählt ist, in Abhängigkeit von diesem jeweils ausgewählten Einsatz unterschiedlich geschaltet oder schaltbar.

Insbesondere weist der Druckmittelweg für unterschiedliche Einsätze unterschiedliche Druckmittelkanäle auf. Der Druckmittelweg weist in einer besonderen Ausführungsform den Druckmittelkanal auf, der den Steuerdruck führt.

Die Erfindung stellt eine Ventileinrichtung bereit, die für eine Vielzahl von unterschiedlichen Bremsanlagen verwendet werden kann. Dabei weist die Ventileinrichtung eine hohe Anzahl standardisierter Komponenten auf. Bei weitgehender Standardisierung müssen daher lediglich unterschiedliche Druckmittelkanäle bzw. Bohrungen in die Gehäuse eingebracht und/oder unterschiedliche Einsätze für die Verwendung der Ventileinrichtung in verschiedenen Bremssystemen verwendet werden. Ggf. werden die Gehäuse mit unterschiedlichen Deckeln versehen. Alternativ können jedoch auch identische oder im Wesentlichen gleiche Deckel verwendet werden, die gleiche oder unterschiedliche Bohrungen aufweisen.

Vorzugsweise ist wenigstens einer der Druckmittelkanäle, insbesondere beim ausgewählten Einsatz, jeweils einer Funktion aus der Gruppe "Belüften", "Entlüften", "Steuerdruck oder Redundanzdruck führen", "Bremsdruck führen" und "nicht verwendet" zugeordnet. Dabei ist vorzugsweise dieser jeweilige Druckmittelkanal gegenüber einer Wahl eines anderen Einsatzes aus dem Satz von Einsätzen aufgrund der gegenüber der Ausbildung dieses anderen Einsatzes anderen Ausbildung des tatsächlich gewählten Einsatzes jeweils einer anderen Funktion aus dieser Gruppe zugeordnet. Gleichen Druckmittelkanälen bzw. Bohrungen können mittels des Einsatzes unterschiedliche Funktionen zugewiesen werden. Insbesondere der den Steuerdruck führende Druckmittelkanal kann somit bspw. entweder durch den Einsatz mit einem pneumatisch ausgesteuerten Druck beaufschlagt werden oder mittels Elektromagnetventilen mit Druckluft aus einem Druckluftvorratsbehälter belüftet oder zu einer Entlüftungsvorrichtung entlüftet werden.

Vorzugsweise umfasst der Druckmittelweg wenigstens einen Druckmittelkanal, der ein Innenkanal ist. Ein Innenkanal ist ein Druckmittelkanal der Anschlüsse zum Einsatz und/oder weitere Druckmittelkanäle der Ventileinrichtung pneumatisch miteinander verbindet. Dabei umfasst der Druckmittelweg beim ausgewählten Gehäuse gegenüber der Wahl eines anderen Gehäuses aus dem Satz von Gehäusen bzw. beim ausgewählten Einsatz gegenüber der Wahl eines anderen Einsatzes aus dem Satz von Einsätzen wenigstens einen anderen Innenkanal.

Ein mit einem Einsatz benutzter Druckmittelkanal ist somit bei dem jeweils anderen Einsatz nicht vorhanden oder wird mit dem jeweils anderen Einsatz nicht benutzt. Je nach Auswahl des Einsatzes kann bspw. ein erster Druckmittelkanal pneumatisch entweder mit einem zweiten oder einem dritten Druckmittelkanal verbunden werden bzw. verbindbar gemacht werden. Das Druckmittel wird somit für verschiedene Ausgestaltungen der Ventileinrichtung über unterschiedliche Druckmittelkanäle im Gehäuse der Ventileinrichtung geführt. Nicht benötigte Druckmittelkanäle können entfallen oder alternativ dennoch in der Ventileinrichtung enthalten sein. Es kann jedoch sein, dass Druckmittelkanäle in einigen Ausgestaltungen der Ventileinrichtung bzw. für die Verwendung in einigen Bremsanlagen anders benutzt werden. Bspw. kann ein selber Druckmittelkanal beim ausgewählten Einsatz den Steuerdruck führen, wohingegen dieser Druckmittelkanal bei einem anderen Einsatz bspw. den Vorratsluftdruck zur Belüftung führt. Das Gehäuse kann somit für jeden Einsatz oder für eine Gruppe von Einsätzen gleiche Druckmittelkanäle, insbesondere in Form gleicher Bohrlöcher, aufweisen.

In einer weiteren Ausgestaltung der Erfindung umfassen die Druckmittelkanäle alternativ oder zusätzlich mehrere zu Anschlüssen am Gehäuse geführte Anschlusskanäle. Dabei umfasst der Druckmittelweg wenigstens zwei dieser Anschlusskanäle, wobei der Druckmittelweg beim ausgewählten Gehäuse gegenüber der Wahl eines anderen Gehäuses aus dem Satz von Gehäusen und/oder beim ausgewählten Einsatz gegenüber der Wahl eines anderen Einsatzes aus dem Satz von Einsätzen wenigstens einen anderen Anschlusskanal umfasst oder die Funktionen von wenigstens zwei vom Druckmittelweg umfassten Anschlusskanälen untereinander vertauscht sind. Somit kann bspw. ein Druckmittelkanal, der zur Belüftung mit einem Vorratsluftdruck dient, bei einem anderen Einsatz den luftmengenverstärkten Bremsdruck vom Relaisventil zur Verbindung mit dem Bremszylinder bereitstellen und/oder umgekehrt.

Vorzugsweise umfasst das Gehäuse einen Gehäuseblock und einen Gehäusedeckel. Das Relaisventil ist vorteilhafterweise im Gehäuseblock angeordnet. Dieser Gehäuseblock umfasst vorteilhafterweise ferner wenigstens zwei Anschlusskanäle. An die Anschlüsse lassen sich Druckmittelleitungen oder Druckmittelrohre zur Verbindung mit weiteren pneumatischen Komponenten der Bremsanlage anschließen.

Der Gehäuseblock ist vorteilhafterweise unabhängig vom ausgewählten Gehäuse gegenüber der Wahl eines, vorzugsweise beliebigen, anderen Gehäuses aus dem Satz von Gehäusen und/oder unabhängig vom ausgewählten Einsatz gegenüber einer Wahl eines, vorzugsweise beliebigen, anderen Einsatzes aus dem Satz von Einsätzen identisch oder zumindest im Wesentlichen gleich ausgebildet. Zwei Gehäuseblöcke werden dabei als im Wesentlichen gleich angesehen, wenn sie gleiche oder unterschiedliche Druckmittelkanäle ansonsten jedoch keine wesentlichen Unterschiede aufweisen, insbesondere derselben oder einer gleichartigen Gussform entstammen. Insbesondere weist der Gehäuseblock bei jedem der Gehäuse bzw. bei jedem der Einsätze gleiche mechanische Befestigungsstellen auf. Somit kann die Ventileinrichtung unabhängig von der Wahl des Einsatzes bzw. unabhängig vom gewählten Bremssystem auf gleiche Weise an Halterungen am Fahrzeug befestigt werden.

Alternativ oder zusätzlich sind die Anschlüsse am Gehäuse bzw. pneumatische Schnittstellen am Gehäuse unabhängig vom gewählten Gehäuse aus dem Satz von Gehäusen bzw. unabhängig vom gewählten Einsatz in gleicher Weise ausgebildet und in einer vorteilhaften Weiterbildung auch gleichermaßen angeordnet. Idealerweise ist ein gleicher oder im Wesentlichen gleicher Gehäuseblock für die Ventileinrichtungen mit gleichen oder unterschiedlich gewählten Einsätzen vorgesehen. Alternativ können jedoch auch bspw. zwei unterschiedliche Gehäuseblöcke für zwei Gruppen von Ventileinrichtungen vorgesehen sein. Bspw. können ein gleicher Gehäuseblock für verschiedene als Modulator mit Elektromagnetventilen ausgebildete Ventileinrichtungen und ein anderer Gehäuseblock für verschiedene als Relaisventil ausgebildete Ventileinrichtungen vorgesehen sein.

Die Gehäusedeckel können für die Ventileinrichtungen mit unterschiedlichen Gehäusen bzw. mit unterschiedlichen Einsätzen entweder gleich oder unterschiedlich ausgebildet sein. Bspw. kann es vorteilhaft sein, trotz dadurch bewirkter geringerer Stückzahlen herzustellender identischer Gehäusedeckel mehrere unterschiedliche Gehäusedeckel herzustellen, da bspw. die Herstellung eines Deckels für eine als Relaisventil ausgebildete Ventileinrichtung aufgrund einfacherer technischer Ausgestaltung kostengünstiger sein kann als eine Herstellung zusätzlicher Deckel, die auch für eine als Modulator ausgebildete Ventileinrichtung verwendet werden können.

Der Einsatz ist vorzugsweise vom Gehäuseblock und vom Gehäusedeckel eingefasst und am Gehäuse festgeklemmt. Dadurch kann bspw. der Deckel unter Einfassung des Einsatzes auf den Gehäuseblock geschraubt werden, so dass beim Aufschrauben des Gehäusedeckels zugleich pneumatische Verbindungen zwischen dem Gehäuse und dem Einsatz hergestellt werden und der Einsatz fest am Gehäuse befestigt wird. Auch ein Austausch des Einsatzes, bspw. zur Reparatur der Ventileinrichtung im Falle eines Defekts am Einsatz, kann somit leicht vorgenommen werden, indem einfach der Deckel abgeschraubt, der Einsatz ausgetauscht und der Deckel anschließend wieder auf den Gehäuseblock geschraubt wird. Der Deckel ist ein Ersatzteil, das in einer Werkstatt repariert werden kann.

Auch ein Umrüsten der Ventileinrichtung für ein anderes Bremssystem ist auf diese Weise einfach möglich, indem lediglich der Einsatz gegen einen anderen Einsatz aus dem Satz von Einsätzen ausgetauscht wird. Ggf. müssen zusätzlich noch Anschlussleitungen an andere Anschlüsse am Gehäuse angeschlossen werden. Ein Austausch der vollständigen Ventileinrichtung ist jedoch nicht nötig. Ggf. muss mit dem Austausch des Einsatzes zusätzlich noch der Gehäusedeckel ausgetauscht werden. Zwei Gehäuse, die gleich ausgebildete Gehäuseblöcke, jedoch unterschiedlich ausgebildete Gehäusedeckel aufweisen, werden als im Wesentlichen gleich ausgebildet angesehen. Insbesondere macht der Gehäuseblock nämlich vorzugsweise einen wesentlichen Anteil am Gehäuse aus bzw. hat einen größeren Anteil am Gehäuse als der Gehäusedeckel.

In einer bevorzugten Ausgestaltung der Erfindung ist der Einsatz eine Ventilpatrone oder ein Ventilblock. Der Einsatz weist dabei wenigstens ein Ventil auf. Insbesondere weist die Ventilpatrone vorzugsweise genau ein Ventil auf, wohingegen der Ventilblock vorzugsweise mehrere, bspw. drei Ventile aufweist. Die Ventile sind vorzugsweise Elektromagnetventile. Mittels des Ventils kann der Druckmittelweg freigeschaltet oder unterbrochen werden.

Alternativ oder zusätzlich kann ein Einsatz in der Ventileinrichtung vorgesehen sein, der ein wenigstens einen Verbindungskanal aufweisender Ventilersatzkörper oder Verbindungskörper ist, der Druckmittelkanäle dauerhaft miteinander verbindet. Der Einsatz ist in diesem Fall eine Art Verteilerstation, die bspw. zu Anschlüssen am Gehäuse geführte Druckmittelkanäle mit zu Ventilen geführten Druckmittelkanälen je nach gewünschter Funktion und/oder eingesetztem Ventil pneumatisch miteinander verbindet, so dass Anschlüsse am Gehäuse trotz intern unterschiedlich genutzter Druckmittelkanäle eine gleiche Funktionalität aufweisen können bzw. mit gleichen Druckmittelleitungen, bspw. zum Druckluftvorrat oder zum Bremszylinder, verwendet werden können.

Ggf. kann ein derartiger Ventilersatzkörper in einem Ventilblock anstelle eines Ventils vorgesehen sein und somit als Dummy-Körper einen zur Aufnahme eines Ventils vorgesehenen Raum ausfüllen und zugleich Verbindungsfunktionen zur dauerhaften Verbindung von Druckmittelkanälen wahrnehmen.

In einer Ausführungsform weist der Einsatz eine ausgehärtete Spritzmasse oder Gussmasse auf bzw. besteht aus dieser Spritzmasse oder dieser Gussmasse. Die Spritzmasse oder Gussmasse ist insbesondere eine Kunststoffspritzmasse oder Kunststoffgussmasse. Dabei umgibt die Spritzmasse bzw. Gussmasse den Einsatz bzw. das Ventil zumindest teilweise. Verschiedene Komponenten des Ventils können auf diese Weise kostengünstig und dauerhaft miteinander verbunden und relativ zueinander fixiert sein. Auch ein ggf. vorhandener Ventilersatzkörper oder Verbindungskörper kann eine derartige oder eine andere Spritzmasse oder Gussmasse aufweisen. Bspw. können zur Aufnahme von Ventilen vorgesehene Hohlräume in einem Magnetventilblock mit einer derartigen Spritzmasse oder Gussmasse ausgefüllt sein. Ggf. erforderliche Verbindungskanäle können beim Spritzen bzw. Gießen ausgespart oder nachträglich in die ausgehärtete Spritzmasse bzw. Gussmasse eingebracht werden. An den Einsatz ist zudem vorteilhafterweise bereits ein Stecker angespritzt.

Der jeweils in der Ventileinrichtung verwendete Einsatz unterscheidet sich in einer Ausführungsform vorzugsweise dadurch von wenigstens einem anderen, insbesondere dritten, Einsatz des Satzes von Einsatzen, dass er zwar wenigstens ein gleiches Ventil, jedoch wenigstens einen anderen Verbindungskanal, insbesondere Bohrung, im Einsatz aufweist. Dadurch können zwar zumindest teilweise gleiche Ventile im Ventilblock verwendet werden. Durch eine andere Druckmittelführung bzw. durch andere Bohrungen im Ventilblock kann jedoch eine unterschiedliche Funktionalität erreicht werden. Die Ausbildung des Gehäuseblocks der Ventileinrichtung bleibt demgegenüber gleich.

In einer anderen Ausführungsform der Erfindung unterscheidet sich der Einsatz dadurch von wenigstens einem anderen, insbesondere dritten, Einsatz des Satzes von Einsätzen, dass er zwei gleiche Verbindungskanäle, insbesondere Bohrungen, im Einsatz bzw. im Ventilblock, jedoch wenigstens ein anderes Ventil aufweist. Eine unterschiedliche Funktionalität wird dabei allein aufgrund anderer eingesetzter Ventile ermöglicht. Ggf. wird eine andere Funktionalität dadurch erreicht, dass anstelle eines Ventils ein Dummy-Körper bzw. Ventilersatzkörper eingesetzt ist bzw. ein zur Aufnahme eines Ventils bestimmter Hohlraum mit einem Kunststoff ausgespritzt ist und dabei dauerhaft einen Verbindungskanal bildet.

Die Ventileinrichtung ist vorzugsweise eine Einrichtung aus einer Gruppe von Einrichtungen, insbesondere mit Gehäusen eines selben Gehäusetyps, wobei diese Gruppe eine Relaismodulatoreinrichtung für eine elektropneumatische Feststellbremse umfasst. Ferner weist die Gruppe eine Relaismodulatoreinrichtung für ein elektronisch geregeltes Bremssystem, eine Relaismodulatoreinrichtung für ein pneumatisches Bremssystem mit oder ohne Antriebsschlupfregelung, eine Elektromagnetrelaisventileinrichtung und eine einfach ausgebildete Relaisventileinrichtung auf. Die Ventileinrichtung ist in Abhängigkeit vom jeweiligen Gehäuse bzw. in Abhängigkeit vom jeweiligen Einsatz aus dieser Gruppe ausgewählt. Insbesondere bestimmt das ausgewählte Gehäuse und/oder der ausgewählte Einsatz, als welche Einrichtung aus dieser Gruppe die Ventileinrichtung eingesetzt werden kann. Zwei unterschiedliche Ventileinrichtungen aus dieser Gruppe unterscheiden sich deshalb lediglich durch unterschiedliche Gehäuse, insbesondere durch eine unterschiedliche Druckmittelführung im Gehäuse eines selben Gehäusetyps, und/oder durch unterschiedliche Einsätze, insbesondere Ventilblöcke. Die Gruppe von Einrichtungen kann ggf. weniger als die genannten Einrichtungen aufweisen. Zumindest umfasst die Gruppe jedoch zwei dieser Einrichtungen, so dass die Ventileinrichtung in Abhängigkeit vom ausgewählten Gehäuse bzw. in Abhängigkeit vom ausgewählten Einsatz eine dieser wenigstens zwei Einrichtungen ist. Vorzugsweise umfasst die Gruppe jedoch wenigstens drei, ganz bevorzugt wenigstens vier, der genannten Einrichtungen.

Vorzugsweise weist das Gehäuse Anschlüsse zur Verbindung mit einem Druckluftvorrat, mit einer Entlüftung, mit einem Steuerdruck oder Redundanzdruck und mit wenigstens einem Bremszylinder auf. Diese Anschlüsse sind mit den Anschlusskanälen verbunden, so dass die bevorzugt als Druckmittel verwendete Druckluft, zu den Anschlüssen geleitet bzw. über die Anschlüsse bezogen werden kann.

Das Gehäuse der Ventileinrichtung weist bevorzugt zumindest überwiegend ein Leichtmetall als Material auf. Besonders bevorzugt weist das Gehäuse Aluminium auf bzw. ist ein Aluminiumdruckgusskörper. Die Druckmittelkanäle sind bevorzugt zumindest teilweise durch Bohrungen im Gehäuse gebildet.

Weitere Ausführungsformen ergeben sich aus den Ansprüchen sowie aus den anhand der Zeichnung näher erläuterten Ausführungsbeispielen. In der Zeichnung zeigen:
- Fig. 1: eine Ventileinrichtung gemäß einem ersten Ausführungsbeispiel der Erfindung nebst zwei alternativ zu einem eingesetzten Ventilblock einsetzbaren Ventilblöcken;
- Fig. 2: einen Gehäuseblock, eine Ventilpatrone und einen Gehäusedeckel einer Ventileinrichtung gemäß einem zweiten Ausführungsbeispiel der Erfindung nebst einer weiteren Ventilpatrone;
- Fig. 3: ein Schaltbild der Ventileinrichtung von Fig. 1;
- Fig. 4: ein Schaltbild einer Ventileinrichtung gemäß einem dritten Ausführungsbeispiel mit einem gegenüber dem eingesetzten Ventilblock gemäß Fig. 1 anderen Ventilblock;
- Fig. 5: eine Ventileinrichtung gemäß einem vierten Ausführungsbeispiel mit einem gegenüber den Ausführungsbeispielen eins und drei wiederum anderen Ventilblock;
- Fig. 6: ein Schaltbild der Ventileinrichtung gemäß dem zweiten Ausführungsbeispiel von Fig. 2 und
- Fig. 7: ein Schaltbild einer Bremsanlage mit der Ventileinrichtung gemäß Fig. 1.

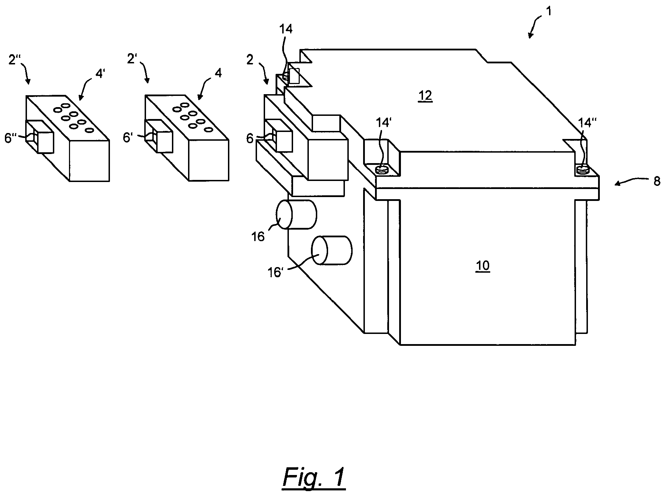

Fig. 1 zeigt eine Ventileinrichtung 1 für eine druckluftbetriebene Bremsanlage eines Nutzfahrzeugs. Mittels dieser Ventileinrichtung 1 können Bremsen des Fahrzeugs betätigt werden. Die Ventileinrichtung 1 weist einen als Ventilblock ausgebildeten Einsatz 2 auf. Aufgrund des ausgewählten Einsatzes 2 ist die Ventileinrichtung 1 eine Relaismodulatoreinrichtung für ein elektronisch geregeltes Bremssystem. Mit alternativ auswählbaren ebenfalls als Ventilblock ausgebildeten Einsätzen 2' und 2" wäre die Ventileinrichtung 1 hingegen eine Relaismodulatoreinrichtung für ein pneumatisches Bremssystems bzw. eine Relaismodulatoreinrichtung für eine elektropneumatische Feststellbremse. Dabei sind die Einsätze 2, 2' und 2" äußerlich zwar gleich ausgebildet bzw. sehen äußerlich gleich aus, weisen jedoch unterschiedliche Luftführungen bzw. unterschiedliche Ventile im Inneren auf. Interne pneumatische Anschlüsse 4 des Einsatzes 2' sind jedoch identisch zu internen pneumatischen Anschlüssen 4' des Einsatzes 2" sowie zu nicht sichtbaren internen pneumatischen Anschlüssen des Einsatzes 2 ausgebildet. Darüber hinaus weisen die Einsätze 2, 2' und 2" gleiche elektrische Anschlüsse bzw. Schnittstellen 6, 6' und 6" auf. Unter den gleichen elektrischen Anschlüssen 6, 6' und 6" sind mechanisch gleiche oder kompatible Steckerkragen bzw. Steckerschäfte zu verstehen, die mit gleichen oder kompatiblen Steckern oder Kupplungen kontaktierbar sind, wobei jedoch ggf. unterschiedliche elektrische Kontakte bzw. eine unterschiedliche Anzahl elektrischer Kontakte herstellbar sind. Insbesondere kann sich eine Pinbelegung der elektrischen Anschlüsse 6, 6' und 6" voneinander unterscheiden. Beispielsweise wird für eine unterschiedliche Anzahl elektrisch anzusteuernder Ventile eine unterschiedliche Anzahl von elektrischen Kontakten benötigt, die in Abhängigkeit von diesen Anforderungen in den elektrischen Anschlüssen 6, 6' und 6" bzw. in den Steckern realisiert sind.

Der Einsatz 2 ist an einem Gehäuse 8 der Ventileinrichtung 1 befestigt. Zum Gehäuse 8 gehören ein Gehäuseblock 10 und ein Gehäusedeckel 12, der bspw. mittels Schrauben 14, 14', 14" und einer weiteren, verdeckt angeordneten Schraube am Gehäuseblock 10 befestigt ist. Der Einsatz bzw. Ventilblock 2 ist zwischen dem Gehäuseblock 10 und dem Gehäusedecke 12 festgeklemmt. Dabei sind über die internen pneumatischen Anschlüsse des Einsatzes 2 pneumatische Verbindungen zu korrespondierenden internen pneumatischen Anschlüssen am Gehäuseblock 10 und/oder am Gehäusedeckel 12 hergestellt.

Die Ventileinrichtung 1 ist auch aufgrund des Gehäuses 8 eine Relaismodulatoreinrichtung für ein elektronisch geregeltes Bremssystem. Eine andere Funktion der Ventileinrichtung 1 kann mittels eines alternativ auswählbaren Einsatzes 2 und/oder mittels eines alternativ auswählbaren Gehäuses 8 erhalten werden.

Der Gehäuseblock 10 weist schließlich pneumatische Anschlüsse 16 und 16' sowie ggf. weitere verdeckt angeordnete pneumatische Anschlüsse auf, die mit Anschlusskanälen im Gehäuseblock 10 pneumatisch verbunden sind.

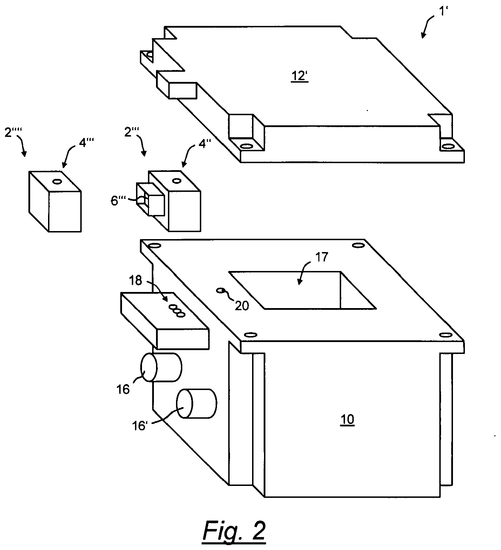

Fig. 2 zeigt eine Ventileinrichtung 1', die als Elektromagnetrelaisventileinrichtung ausgebildet ist, in einer Explosionsdarstellung. Dabei ergibt sich der Unterschied der Ventileinrichtung 1' gegenüber der Ventileinrichtung 1 von Fig. 1 im Wesentlichen durch die Auswahl eines gegenüber dem Einsatz 2 anderen Einsatzes 2"'. Im Übrigen weist die Ventileinrichtung 1' ein zum Gehäuse 8 der Ventileinrichtung 1 im Wesentlichen gleiches Gehäuse auf. Insbesondere weist auch die Ventileinrichtung 1' den Gehäuseblock 10 mit gleichen Druckmittelkanälen auf. Alternativ könnten jedoch auch weniger, mehr und/oder andere Druckmittelkanäle im Gehäuseblock 10 vorgesehen sein, in deren Abhängigkeit sich die Funktion der Ventileinrichtung 1' ergibt.

Anstelle des Gehäusedeckels 12 ist bei der Ventileinrichtung 1' ein Gehäusedeckel 12' vorgesehen, der gegenüber dem Gehäusedeckel 12 vereinfacht ausgebildet ist, insbesondere weil auch der Einsatz 2'" gegenüber den Einsätzen 2, 2' und 2" von Fig. 1 vereinfacht ausgebildet ist und im gezeigten Ausführungsbeispiel lediglich einen internen pneumatischen Anschluss zum Gehäusedeckel 12' sowie drei weitere verdeckt angeordnete pneumatische Anschlüsse zum Gehäuseblock 10 aufweist. Ferner ist ein elektrischer Anschluss 6'" vorgesehen. Bei einem alternativ auswählbaren, ebenfalls als Ventilpatrone ausgebildeten und anstelle des Einsatzes 2'" zwischen dem Gehäuseblock 10 und dem Gehäusedeckel 12' einsetzbaren Einsatz 2"" wird hingegen ein elektrischer Anschluss nicht benötigt. Mit diesem Einsatz 2"" ist die Ventileinrichtung 1 eine rein pneumatische Relaisventileinrichtung.

Im Gehäuseblock 10 ist im Wesentlichen ein Relaisventil 17 angeordnet. Ferner weist der Gehäuseblock 10 interne pneumatische Schnittstellen 18 zur Verbindung mit dem Einsatz 2'" bzw. einem anderen Einsatz auf. Eine pneumatische Verbindung zwischen dem Gehäuseblock 10 und dem Gehäusedecke 12' wird über eine pneumatische Schnittstelle 20 erreicht. Pneumatische Verbindungen über pneumatische Schnittstellen bzw. Anschlüsse können dabei durch korrespondierend angeordnete Bohrlöcher und ein Abdichten durch ein im Übergangsbereich angeordnetes Dichtmittel, bspw. einen O-Ring hergestellt sein.

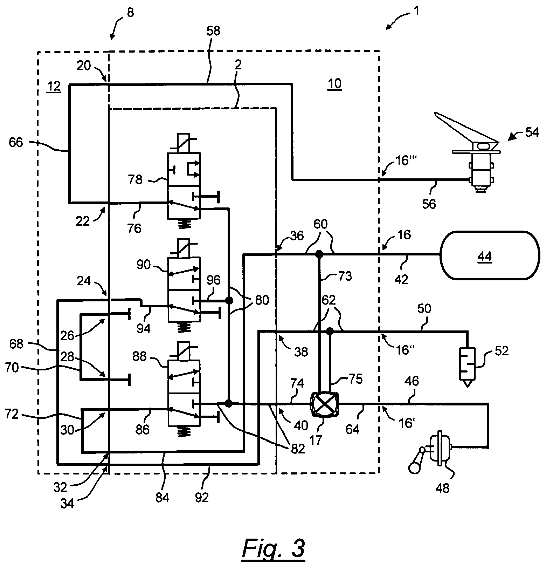

Fig. 3, Fig. 5 und Fig. 6 zeigen beispielhafte Schaltbilder der Ventileinrichtung 1 von Fig. 1 mit dem Einsatz 2 einer Ventileinrichtung 1" und mit dem Einsatz 2' von Fig. 1 und einer Ventileinrichtung 1'" mit dem Einsatz 2" von Fig. 1 jeweils in Verbindung mit weiteren Komponenten einer Bremsanlage. Die nachfolgende Beschreibung bezieht sich trotzt Nennung der Ventileinrichtung 1 auch auf die Ventileinrichtungen 1" und 1"', da diese alle gleiche Gehäuse 8 bzw. 8' aufweisen.

Insbesondere weist das Gehäuse 8 den Gehäuseblock 10 und den Gehäusedeckel 12 auf. Der Einsatz 2 ist zwischen dem Gehäuseblock 10 und dem Gehäusedeckel 12 angeordnet und weist interne pneumatische Schnittstellen 22, 24, 26, 28, 30, 32 und 34 zum Gehäusedeckel 12 sowie weitere interne pneumatische Schnittstellen 36, 38 und 40 zum Gehäuseblock 10 auf. Über den pneumatischen Anschluss 16 und eine Druckluftleitung 42 ist die Ventileinrichtung 1 mit einem Druckluftvorratsbehälter 44 verbunden und kann somit mit Druckluft aus einem Druckluftvorrat versorgt werden. Über den pneumatischen Anschluss 16' ist die Ventileinrichtung 1 ferner über eine Druckluftleitung 46 mit wenigstens einem Bremszylinder 48 verbunden, so dass ein Fahrzeug mittels dieses Bremszylinders 48 abgebremst werden kann.

Über einen weiteren pneumatischen Anschluss 16" und eine Druckluftleitung 50 kann die Ventileinrichtung 1 zu einer Entlüftung 52 entlüftet werden. Ggf. kann die Entlüftung 52 auch direkt in die Ventileinrichtung 1 integriert bzw. an diese Ventileinrichtung 1 angeflanscht sein. Ein weiterer pneumatischer Anschluss 16'" ist schließlich am Gehäuse 8 der Ventileinrichtung 1 zur Verbindung mit einer Bremspedaleinrichtung 54 über eine Druckluftleitung 56 vorgesehen.

Das Gehäuse 8 weist vorzugsweise als Bohrungen realisierte Druckmittelkanäle auf. Bei den Druckmittelkanälen wird im Folgenden zwischen Anschlusskanälen und Innenkanälen unterschieden. Anschlusskanäle 58, 60, 62 und 64 sind zu den pneumatischen Anschlüssen 16 bis 16'" am Gehäuse 8 geführte Druckmittelkanäle. Weitere Druckmittelkanäle sind Innenkanäle 66, 68, 70 und 72, die in diesem Fall im Gehäusedeckel 12 angeordnet sind. Darüber hinaus weist die Ventileinrichtung 1, insbesondere im Gehäuseblock 10, weitere Druckmittelkanäle bzw. Innenkanäle 73, 74 und 75 auf.

Mittels des Ventilblocks 2 wird elektropneumatisch ein Bremsdruck ausgesteuert und über die interne pneumatische Schnittstelle 40 und den Druckmittelkanal 74 dem Relaisventil 17 bereitgestellt. Das Relaisventil 17 stellt den im Druckmittelkanal 74 vorliegenden Luftdruck über den Anschlusskanal 64 mit einer größeren Luftmenge bereit. Hierzu bezieht es Druckluft über den Druckmittelkanal 73 bzw. entlüftet den Anschlusskanal 64 über den Druckmittelkanal 75 zur Entlüftung 52.

Ein Redundanzdruck wird zur beispielhaften Veranschaulichung einer weiteren möglichen Luftführung im gezeigten Ausführungsbeispiel dem Ventilblock 4 über den Anschlusskanal 58 im Gehäuseblock 10, weiter über die pneumatische Schnittstelle 20, über den Innenkanal 66 und schließlich über die interne pneumatische Schnittstelle 22 bereitgestellt. Im Falle eines Elektronikausfalls bzw. Stromausfalls bzw. unbestromter Ventile wird der Redundanzdruck zum Relaisventil 17 durchgeleitet.

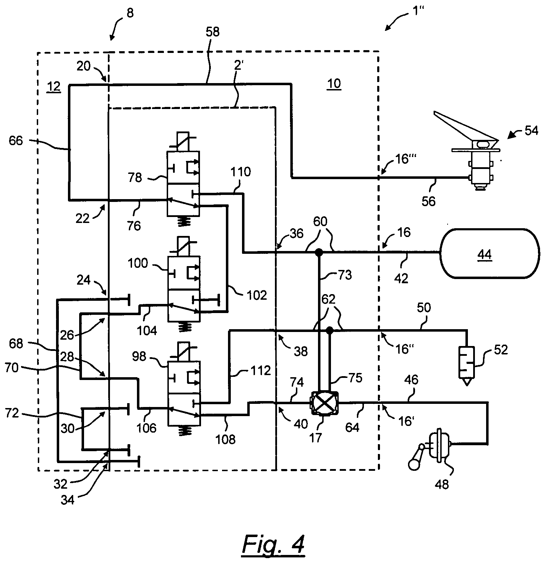

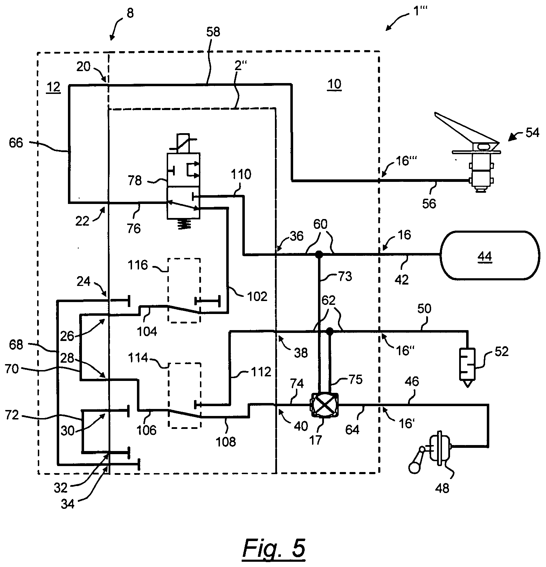

Soweit gleicht die Ventileinrichtung 1 von Fig. 3 der in Fig. 4 gezeigten Ventileinrichtung 1" und der in Fig. 5 gezeigten Ventileinrichtung 1'". Unterschiede der Ventileinrichtung 1 zu den Ventileinrichtungen 1" und 1'" ergeben sich aus den unterschiedlich ausgewählten Einsätzen bzw. Ventilblöcken 2 und 2' bzw. 2". Mittels der unterschiedlichen Einsätze 2 und 2' bzw. 2" sind nämlich unterschiedliche Druckmittelwege schaltbar.

In der Ventileinrichtung 1 von Fig. 3 ist ein Druckmittelweg geschaltet, der den Anschlusskanal 58, den Innenkanal 66 und den Innenkanal 74 umfasst. Zwischen den internen pneumatischen Schnittstellen 22 und 40 gehören dem Druckmittelweg ein Verbindungskanal 76, ein Elektromagnetventil 78, ein Verbindungskanal 80 und ein Verbindungskanal 82 an. Weitere Druckmittelwege sind bspw. zur elektropneumatischen Erhöhung eines auszusteuernden Luftdrucks durch den Anschlusskanal 60, einen Verbindungskanal 84, den Innenkanal 72, einen Verbindungskanal 86, den Verbindungskanal 82 und den Innenkanal 74 gegeben. Zum Herstellen der pneumatischen Verbindung bzw. des geschalteten Druckmittelweges muss lediglich das Elektromagnetventil 88 bestromt werden.

Eine Entlüftung bzw. Erniedrigung eines ausgesteuerten Drucks kann schließlich im Falle einer Bestromung eines Elektromagnetventils 90 über einen weiteren Druckmittelweg erfolgen, dem der Anschlusskanal 62, ein Verbindungskanal 92, der Innenkanal 68, ein Verbindungskanal 94, dieses Elektromagnetventil 90, ein Verbindungskanal 96, der Verbindungskanal 80, der Verbindungskanal 82 und der Innenkanal 74 angehören.

Der Innenkanal 70 wird in Verbindung mit dem Ventilblock 2 nicht verwendet. Die internen pneumatischen Schnittstellen 26 und 28 und/oder daran anschließende Verschlüsse bzw. Sacklöcher können ggf. auch entfallen. In alternativen, nicht gezeigten, Ausführungsbeispielen kann der nicht benötigte Innenkanal 70 auch entfallen. Ferner können die vorhandenen Druckmittelkanäle, insbesondere die Verbindungskanäle, auch anders geführt sein und beispielsweise auch andere pneumatische Schnittstellen miteinander verbinden bzw. an andere pneumatische Schnittstellen angeschlossen sein.

Fig. 4 zeigt die Ventileinrichtung 1" mit dem gegenüber der Ventileinrichtung 1 von Fig. 3 anders ausgewählten Einsatz 2'. Der Einsatz bzw. Ventilblock 2' weist wie der Ventilblock 2 das Elektromagnetventil 78 auf. Im Unterschied zum Ventilblock 2 weist der Ventilblock 2' aber Elektromagnetventile 98 und 100 anstelle der Elektromagnetventile 88 und 90 auf. Ferner weist der Ventilblock 2' eine gegenüber dem Ventilblock 2 abweichende Luftführung auf. Aufgrund der anderen Ventileinrichtung 2 bzw. aufgrund der geänderten Luftführung sind die schaltbaren bzw. geschalteten Luftwege der Ventileinrichtung 1" gegenüber den Luftwegen der Ventileinrichtung 1 geändert. Insbesondere weist bspw. ein Luftweg, der einem pneumatisch von der Bremspedaleinrichtung 54 ausgesteuerten Sollbremsdruck als Redundanzdruck zum Relaisventil 17 führt, zusätzlich zum Anschlusskanal 58, zum Innenkanal 66, zum Innenkanal 76, zum Elektromagnetventil 78 und zum Innenkanal 74 nunmehr ein Verbindungskanal 102, einen Weg durch das Elektromagnetventil 100, einen Verbindungskanal 104, die Innenleitung 70, einen Verbindungskanal 106, einen Weg durch das Elektromagnetventil 98 und einen Verbindungskanal 108 auf. Somit wird aufgrund der Ausbildung des Ventilblocks 2' der Innenkanal 70 als Teil eines Luftweges benutzt, wohingegen durch Wahl des Ventilblocks 2 dieser Innenkanal 70 unbenutzt ist und verschiedene Luftwege den Innenkanal 68 bzw. 72 aufweisen. Darüber hinaus weist der Ventilblock 2' Verbindungskanäle 110 und 112 auf.

Die Ventileinrichtungen 1 und 1" unterscheiden sich aufgrund der unterschiedlich gewählten Ventilblöcke 2 und 2' durch eine unterschiedliche Funktionalität, insbesondere im Falle eines Elektronikausfalls, Stromausfalls bzw. Ausfalls wenigstens eines der Elektromagnetventile 78, 88, 90, 98, 100. Für diese unterschiedliche Funktionalität muss lediglich ein hierfür vorgesehener Ventilblock 2 bis 2"" gewählt werden, wohingegen bspw. das Gehäuse 8, dasselbe bleiben kann. Dieses Gehäuse 8 kann somit in großen Stückzahlen kostengünstig produziert werden. Das Gehäuse 8 kann eines von zahlreichen Gehäusen eines gleichen Gehäusetyps sein, wobei alle Gehäuse 8 dieses Gehäusetyps im Wesentlichen gleiche Merkmale aufweisen, insbesondere derselben oder einer gleichartigen Gussform entstammen. Die Druckmittelkanäle bzw. Bohrlöcher dieser Gehäuse 8 des gleichen Gehäusetyps können jedoch unterschiedlich angeordnet und somit an die jeweils gewünschte Funktion der das jeweilige Gehäuse 8 aufweisenden Ventileinrichtung 1 angepasst sein.

Fig. 5 zeigt die Ventileinrichtung 1"', die weitgehend der Ventileinrichtung 1" von Fig. 4 gleicht. Insbesondere ist bei der Ventileinrichtung1'" wiederum das Gehäuse 8 vorgesehen. Sogar der Ventilblock 2" gleicht weitgehend dem Ventilblock 2' von Fig. 4. Insbesondere ist eine gleiche Luftführung, insbesondere aufgrund gleicher Bohrungen, im Ventilblock 2" gegenüber dem Ventilblock 2' vorgesehen. Beim Ventilblock 2" sind jedoch anstelle der Elektromagnetventile 98 und 100 des Ventilblocks 2' von Fig. 4 Dummy-Körper 114 und 115 vorgesehen, die permanent eine Verbindung zwischen den Verbindungskanälen 102 und 104 bzw. zwischen den Verbindungskanälen 106 und 108 bereitstellen und ansonsten einen verbleibenden Leerraum ausfüllen. Die Dummy-Körper 114, 116 können nach ihrer Fertigung anstelle von Elektromagnetventilen 98, 100 in den Ventilblock 2" eingesetzt werden. Alternativ können die Dummy-Körper 114, 116 jedoch auch durch Ausgießen bzw. Ausspritzen von zur Aufnahme der Elektromagnetventile 98 und 90 geeigneter Hohlräume mit einer Spritzmasse bzw. Vergussmasse hergestellt werden, wobei die o.g. Verbindungswege, bspw. durch vorheriges Einbringen von Röhren, freigehalten werden.

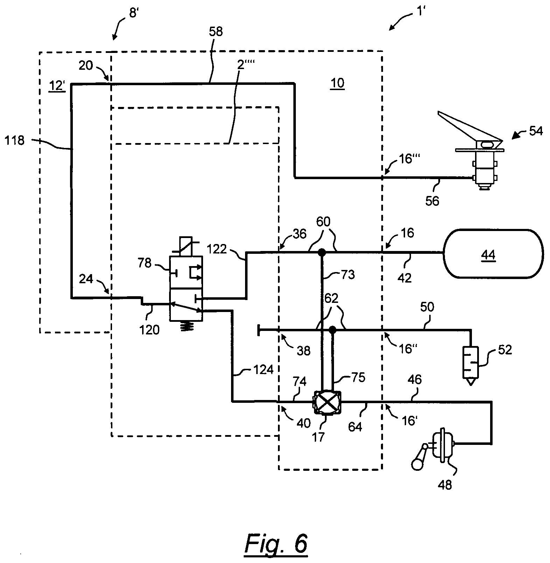

Fig. 6 zeigt ein Schaltbild der Ventileinrichtung 1' von Fig. 2 mit dem vereinfachten Gehäusedeckel 12' und dem Patronenventil 2"", welches das Elektromagnetventil 78, jedoch keine weiteren Ventile aufweist. Der Gehäuseblock 10 ist jedoch identisch zu den Gehäuseblöcken 10 der Ventileinrichtungen gemäß den Fig. 3, 4 und 5 ausgebildet. In seiner Funktion ist die Ventileinrichtung 1' identisch mit der Ventileinrichtung 1'" von Fig. 5. Der Gehäusedeckel 12' ist gegenüber dem Gehäusedeckel 12 einfacher konstruiert, weist insbesondere lediglich einen Innenkanal 118 anstelle der Innenkanäle 66, 68, 70 und 72 auf. Der Einsatz bzw. die Ventilpatrone 2"" weist Druckmittelkanäle 120, 122 und 124 als Verbindungen in einem Gehäuse 8' der Ventileinrichtung 1' und dem Elektromagnetventil 78 auf. Die Ventilpatrone 2"" ist somit gegenüber dem Ventilblock 2" ebenfalls einfacher konstruiert und kostengünstiger herzustellen. In Ausnahmefällen kann es daher sinnvoll sein, einzelne Einsätze bzw. Untergruppen von Einsätzen zumindest äußerlich unterschiedlich auszubilden, wohingegen im Allgemeinen mehrere Einsätze der Gruppe von Einsätzen äußerlich, insbesondere in ihren Abmessungen, vorzugsweise gleich ausgebildet sind. Ebenso kann es vorteilhaft sein in einzelnen Fällen andersartig ausgebildete Gehäusedeckel 12' anstelle des Gehäusedeckels 12 vorzusehen, wobei jedoch das Gehäuse 8' insgesamt weitgehend dem Gehäuse 8 gleicht, da bspw. ein gleicher Gehäuseblock 10 verwendet wird. Am Gehäuseblock 10 sind vorzugsweise mechanische Schnittstellen zur Befestigung an einem Fahrzeugrahmen vorgesehen. Die Erfindung ermöglicht es somit, unabhängig von der Wahl des jeweiligen Einsatzes 2, 2', 2" oder 2"" die Ventileinrichtung 1 bzw. 1", 1'" oder 1"" am Fahrzeugrahmen zu befestigen, ohne dass hierfür unterschiedliche Adapter oder andere Aufnahmevorrichtungen vorgesehen werden müssten. Auch wenn das Gehäuse 8 bzw. der Gehäuseblock 10 aus einem Satz von im wesentlichen gleichen Gehäusen bzw. Gehäuseblöcken mit unterschiedlichen Druckmittelkanälen ausgewählt ist, sind die mechanischen Schnittstellen vorzugsweise die gleichen, so dass die Ventileinrichtung 1 bzw. 1 ", 1'" oder 1"" unabhängig vom jeweils gewählten Gehäuse 8 am Fahrzeugrahmen befestigt werden kann.

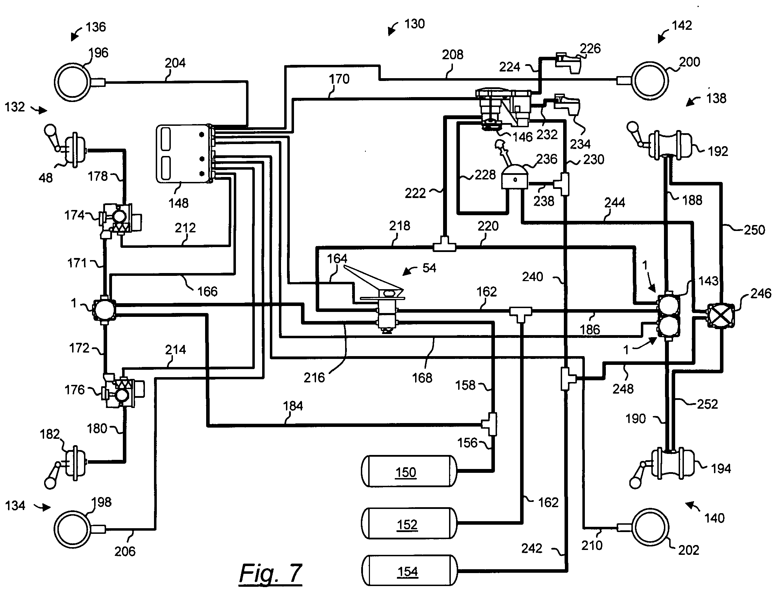

Fig. 7 zeigt eine erfindungsgemäße Bremsanlage 130 gemäß einem Ausführungsbeispiel der Erfindung mit der Ventileinrichtung 1 von Fig. 1. Diese Ventileinrichtung 1 weist den Einsatz 2 auf, so dass die Bremsanlage 130 als sog. EBS-Bremssystem bzw. als elektronisch geregeltes Bremssystem ausgebildet ist, wobei ein Bremsdruck gemäß einem Verzögerungsanforderungssignal elektropneumatisch ausgesteuert wird.

Die Ventileinrichtung 1 ist somit als 1-Kanal-Achsmodulator ausgebildet und zum Betätigen von Bremsen 132 und 134 an einer Vorderachse 136 eines Fahrzeugs, das die Bremsanlage 130 aufweist, vorgesehen. Weitere Ventileinrichtungen 1 sind als Radmodulatoren jeweils für eine Bremse 138 bzw. 140 an einer Hinterachse 142 des Fahrzeugs vorgesehen und in einem 2-Kanal-Achsmodulator 143 zusammengefasst. Darüber hinaus weist die Bremsanlage 130 die einen Bremswertgeber aufweisende Bremsbetätigungseinrichtung 54, eine Anhängersteuerventileinrichtung 146 und eine als Steuereinheit ausgebildete Einrichtung zur Steuerung 148 auf. Die Einrichtung zur Steuerung 148 nimmt zentrale Steuerfunktionen des elektronischen Bremssystems wahr, so dass sie zugleich eine Zentrale des elektronischen Bremssystems ist.

Die Bremsanlage 130 ist mit drei Bremskreisen aufgebaut, die von drei Druckluftvorratsbehältern 150, 152 und 154 gespeist werden und ihrerseits Druckluft von wenigstens einem nicht dargestellten Kompressor vorzugsweise nach Aufbereitung in einer Druckluftaufbereitungseinrichtung und vorzugsweise über ein Vierkreisschutzventil erhalten. Vornehmlich können mittels des ersten Bremskreises die Bremsen 132 und 134 an der Vorderachse 136 und mittels des zweiten Bremskreises die Bremsen 138 und 140 an der Hinterachse 142 des Fahrzeugs sowie nicht dargestellte Bremsen eines angehängten Anhängers betätigt werden. Ein vom Druckluftvorratsbehälter 154 gespeister dritter Bremskreis ist zum Betrieb, insbesondere Lösen, einer Feststellbremse vorgesehen.

Druckluft aus den Druckluftvorratsbehältern 150 und 152 wird über Druckluftleitungen 156 und 158 bzw. 160 und 162 der Bremspedaleinrichtung 54 bereitgestellt. In Erwiderung auf eine Betätigung des Bremspedals dieser Bremspedaleinrichtung 54 erzeugt diese Bremspedaleinrichtung 54 bzw. der Bremswertgeber ein elektrisches Bremsanforderungssignal, welches über eine elektrische Schnittstelle an eine elektrische Leitung 164 und über diese elektrische Leitung 164 weiter über eine elektrische Schnittstelle an die Einrichtung zur Steuerung 148 geleitet wird. Darüber hinaus steuert die Bremsbetätigungseinrichtung 54 direkt einen Redundanzdruck für die beiden Bremskreise aus und stellt ihn über zwei seiner pneumatischen Schnittstellen bereit.

Die Einrichtung zur Steuerung bzw. Steuereinrichtung 148 ist über elektrische Leitungen 166, 168 und 170 mit den Ventileinrichtungen bzw. Modulatoren 1 bzw. mit der Anhängersteuerventileinrichtung 146 elektrisch verbunden. Die Steuereinrichtung 148 kann somit Steuerfunktionen bzw. in Verbindung mit Sensoren Regelfunktionen für die von ihr angesteuerten Komponenten der Bremsanlage 130 bzw. für die Ventileinrichtung 1 und für die Anhängersteuerventileinrichtung 146 übernehmen.

In Erwiderung auf das Bremsanforderungssignal steuert die Steuereinrichtung 148 die Ventileinrichtungen 1 an, so dass diese Ventileinrichtungen 1 einen Bremsdruck aussteuern, den die Steuereinrichtung 148 nach dem Bremsanforderungssignal ggf. in Abhängigkeit weiterer Parameter errechnet bzw. auswählt. Nicht dargestellte Drucksensoren in der Ventileinrichtung 1 messen den ausgesteuerten Bremsdruck, leiten die Messergebnisse über die elektrische Leitung 166 bzw. 168 an die Steuereinrichtung 148 weiter, so dass eine Rückkopplung besteht und der Bremsdruck von Steuereinrichtung148 eingeregelt werden kann. Eine Elektronik zum Aussteuern bzw. Einregeln des Bremsdrucks ist somit in der Steuereinrichtung 148 enthalten. Die Ventileinrichtung 1 braucht deshalb keine Steuerelektronik bzw. Regelelektronik aufweisen. Alternativ kann jedoch auch ein Teil oder die gesamte Elektronik zur Einregelung des Bremsdrucks an der Ventileinrichtung 1 angeordnet sein.

Der von der Ventileinrichtung 1 bzw. dem 1-Kanal-Achsmodulator 1 an der Vorderachse 136 ausgesteuerte Bremsdruck wird über eine Druckluftleitung 171 bzw. 172 zunächst einem sog. ABS-Ventil 174 bzw. 176 für eine Antiblockierfunktion und danach über eine Druckluftleitung 178 bzw. 180 dem Bremszylinder 48 und einem Bremszylinder 182 bzw. einem Membranteil des Bremszylinders 48 bzw. 182 bereitgestellt. Mittels dieser Bremszylinder 48 und 182 können die Bremsen 132 und 134 betätigt werden. Die Druckluft hierfür wird der Ventileinrichtung 1 an der Vorderachse 136 des Fahrzeugs über eine Druckluftleitung 184 aus dem ersten Bremskreis zur Verfügung gestellt.

Eine Druckluftleitung 186 versorgt hingegen die Ventileinrichtungen 1 bzw. den 2-Kanal-Achsmodulator 143 an der Hinterachse 142 des Fahrzeugs mit Druckluft aus dem zweiten Bremskreis. Der analog zur Aussteuerung des Bremsdruckmittels der Ventileinrichtung 1 an der Vorderachse 136 von den Ventileinrichtungen 1 an der Hinterachse 142 des Fahrzeugs ausgesteuerte Bremsdruck wird über eine Druckluftleitung 188 bzw. 190 einem Membranteil eines kombinierten Federspeicherbremszylinders 192 bzw. 194 bereitgestellt.

Die Bremsanlage 130 stellt darüber hinaus Funktionen eines Antiblockiersystems, eine Antriebsschlupfregelung und eine elektronische Stabilitätskontrolle bereit. Hierfür werden Drehzahlinformationen der einzelnen Räder des Fahrzeugs während der Fahrt und während des Bremsvorgangs benötigt. Daher weist die Bremsanlage 130 Radsensiermittel 196, 198, 200 und 202 auf, die Raddrehgeschwindigkeiten der einzelnen Räder sensieren und Messwerte bzw. eine Information über die sensierten Raddrehgeschwindigkeiten mittels einer elektrischen Leitung 204, 206, 208 bzw. 210 an die Steuereinrichtung 148 leiten.

Die Antiblockierfunktion soll einer Blockierneigung der Räder entgegen wirken. Bei erkannter Blockierneigung eines Rades an der Hinterachse 142 des Fahrzeugs wird daher die diesem Rad zugeordnete Ventileinrichtung 1 über die elektrische Leitung 168 angesteuert, um die Bremse 138 bzw. 140 zu lösen bzw. um den Membranteil des kombinierten Federspeicherbremszylinders 192 bzw. 194 über die Druckluftleitung 188 bzw. 190 zu entlüften bzw. um den pneumatischen Druck im jeweiligen Membranteil zu senken. An der Vorderachse wird hingegen zum Lösen der Bremse 132 bzw. 134 im Falle einer erkannten Blockierneigung das ABS-Ventil 174 bzw. 176 über eine elektrische Leitung 212 bzw. 214 von der Steuereinrichtung 148 angesteuert. In Erwiderung darauf entlüftet das ABS-Ventil 174 bzw. 176 die Druckluftleitung 178 bzw. 180 oder erhöht zumindest den darin vorliegenden Druck nicht weiter.

Auch wenn mittels der elektronischen Stabilitätsfunktion ein drohender oder tatsächlicher Stabilitätsverlust bzw. eine Schleuderneigung des Fahrzeugs festgestellt wird, können die ABS-Ventile 174 und 176 sowie die Ventileinrichtungen 1 an der Hinterachse 142 des Fahrzeugs gezielt angesteuert werden, um, wie für die ABS-Funktion beschrieben, den in Druck in den Druckluftleitungen 178, 180, 188 und 190 zu beeinflussen bzw. gezielt einzelne Räder einzubremsen.

Ebenfalls für die elektronische Stabilitätsfunktion sowie zusätzlich zur Antriebsschlupfregelung kann gezielt der Druck in den Druckluftleitungen 178, 180, 188 und 190 erhöht werden. Im Falle der Antriebsschlupfregelung erkennt die Steuereinrichtung 148 mittels der sensierten Raddrehzahlen sowie ggf. mittels weiterer Daten einen Schlupf der Räder und steuert die Ventileinrichtungen 1 daher zum Abbremsen dieser Räder an, um dem Schlupf entgegen zu wirken bzw. um ein Durchdrehen der Räder zu verhindern. An der Hinterachse 142 können dabei beide Räder unabhängig voneinander abgebremst werden. An der Vorderachse 136 ist hingegen der 1-Kanal-Achsmodulator bzw. die Ventileinrichtung 1 für das Abbremsen der Räder zuständig. Die Bremsen 132 und 134 an den Rädern der Vorderachse 136 können aufgrund der ABS-Ventile 174 und 176 auch mit voneinander unterschiedlichen Bremsdrücken beaufschlagt werden. In diesem Ausführungsbeispiel sind zwei Ventileinrichtungen 1 als Radmodulatoren zusammen als der 2-Kanal-Achsmodulator an der Hinterachse 142, jedoch nur eine Ventileinrichtung 1 als der 1-Kanal-Achsmodulator zusammen mit den zwei ABS-Ventilen 174 und 176 an der Vorderachse 136 des Fahrzeugs vorgesehen.

In einem alternativen, nicht gezeigten Ausführungsbeispiel können jedoch auch an der Vorderachse zwei als Radmodulatoren ausgebildete Ventileinrichtungen 1 bzw. ein 2-Kanal-Achsmodulator anstelle der als 1-Kanal-Achsmodulator eingesetzten Ventileinrichtung 1 mit den zwei ABS-Ventilen 174, 176 vorgesehen werden.

Der Ventileinrichtung 1 an der Vorderachse 136 wird zur pneumatischen Aussteuerung des Bremsdrucks im Redundanzfall der mittels der Bremsbetätigungseinrichtung 54 im ersten Bremskreis ausgesteuerte Redundanzdruck über eine Druckluftleitung 216 zugeleitet. Die Ventileinrichtungen 1 an der Hinterachse 142 erhalten analog über Druckluftleitungen 218 und 220 den ausgesteuerten Redundanzdruck aus dem zweiten Bremskreis. Im Fall eines elektrischen Ausfalls bzw. im Fall eines Elektronikausfalls steuern die Ventileinrichtungen 1 den Bremsdruck in den Druckluftleitungen 178, 180, 188 und 190 rein pneumatisch gemäß den jeweiligen Redundanzdruck im ersten bzw. zweiten Bremskreis aus, so dass das die Bremsanlage 130 aufweisende Fahrzeug pneumatisch abgebremst werden kann.

Die Bremsanlage 130 steuert darüber hinaus ggf. Bremsen an einem Anhänger an. Über eine Druckluftleitung 222 wird der Redundanzdruck aus dem zweiten Bremskreis über eine pneumatische Schnittstelle mit der Anhängersteuerventileinrichtung 146 verbunden. Über eine andere pneumatische Schnittstelle ist eine weitere Druckluftleitung 224 an der Anhängersteuerventileinrichtung 146 angeschlossen, die den Redundanzdruck an einen Druckluftanschluss 226 liefert, der mit pneumatischen Systemen des Anhängers verbindbar ist. Über weitere pneumatische Schnittstellen der Anhängersteuerventileinrichtung 146 sind Druckluftleitungen 228, 230 und 232 angeschlossen. Über die Druckluftleitung 228 kann ein ausgesteuerter und über die Druckluftleitung 230 direkt ein Vorratsluftdruck aus dem dritten Bremskreis bezogen und über die Druckluftleitung 232 an einen Druckluftanschluss 234 zur Verbindung mit Druckluftsystemen des Anhängers bereitgestellt werden. Die Druckluft mit dem ausgesteuerten Luftdruck wird dabei über eine Feststellbremsbetätigungseinrichtung 236 bezogen, die wiederum den Vorratsluftdruck aus dem dritten Bremskreis über Druckluftleitungen 238, 240 und 242 bezieht. Eine elektrische Ansteuerung und Überwachung des Anhängersteuerventils 146 erfolgt über die elektrische Leitung 170.

Mittels der Feststellbremsbetätigungseinrichtung 236 kann eine Feststellbremsfunktion der Bremsanlage 130 gesteuert werden. Die Feststellbremsfunktion kann von der Feststellbremsbetätigungseinrichtung 236 getrennt für das Fahrzeug und den ggf. an das Fahrzeug angekoppelten Anhänger aktiviert und deaktiviert werden. Die Druckluftversorgung erfolgt aus dem dritten Bremskreis. Zum Einlegen bzw. Lösen der Feststellbremsfunktion werden Federspeicherteile der Federspeicherbremszylinder 192 und 194 entlüftet bzw. belüftet. Hierfür stellt die Feststellbremsbetätigungseinrichtung 236 den ausgesteuerten Feststellbremsdruck über eine Druckluftleitung 244 einem Relaisventil 246 bereit, das diesen Luftdruck mit über eine Druckluftleitung 248 bezogener Druckluft verstärkt und zum Lösen der Feststellbremse über Druckluftleitungen 250 und 252 Federspeicherteilen der kombinierten Federspeicherbremszylinder 192 und 194 bereitstellt.

Alle in der vorstehenden Beschreibung und in den Ansprüchen genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Ventileinrichtung (1) zur Bremssteuerung einer druckmittelbetriebenen Bremsanlage (130) eines Fahrzeugs
mit einem Gehäuse (8), das mehrere Druckmittelkanäle (58 - 75; 118) aufweist,
mit einem Relaisventil (17), das einen pneumatischen Steuerdruck, der diesem Relaisventil (17) durch wenigstens einen der Druckmittelkanäle (58 - 75; 118) zugeleitet wird, mit einer größeren Druckmittelmenge bereitstellt, und mit wenigstens einem Einsatz (2), insbesondere Ventilblock, der pneumatisch mit wenigstens zwei Druckmittelkanälen (58, 66) verbunden ist, wobei diese zwei Druckmittelkanäle (58, 66) mittels einer pneumatischen Verbindung durch diesen Einsatz (2) pneumatisch miteinander verbunden oder verbindbar sind
und wobei zumindest diese zwei miteinander verbundenen oder verbindbaren Druckmittelkanäle (58, 66) und deren pneumatische Verbindung oder Verbindungsmöglichkeit durch den Einsatz (2) zusammen einen Druckmittelweg definieren,
**dadurch gekennzeichnet, dass**
das Gehäuse (8) aus einem Satz von im Wesentlichen gleichen Gehäusen mit unterschiedlichen Druckmittelkanälen auswählbar ist und der oder die Einsätze (2) aus einem Satz von im Wesentlichen äußerlich gleich ausgebildeten Einsätzen, jedoch mit unterschiedlichen Luftführungen auswählbar ist bzw. sind,
der Druckmittelweg aufgrund des jeweils ausgewählten Gehäuses (8) in Abhängigkeit von diesem jeweils ausgewählten Gehäuse (8) unterschiedlich verläuft und/oder
der Druckmittelweg aufgrund des jeweils ausgewählten Einsatzes (2) in Abhängigkeit von diesem jeweils ausgewählten Einsatz (2 - 2"") unterschiedlich geschaltet oder schaltbar ist und
die Ventileinrichtung in Abhängigkeit des ausgewählten Gehäuses (8) und/oder in Abhängigkeit des ausgewählten Einsatzes (2) eine entsprechende Funktion erhält.

2. Ventileinrichtung nach Anspruch 1,
**dadurch gekennzeichnet, dass**
wenigstens einer der Druckmittelkanäle (58 - 75; 118) im Falle des ausgewählten Einsatzes (2) jeweils einer Funktion aus der Gruppe "Belüften", "Entlüften", "Steuerdruck oder Redundanzdruck führen", "Bremsdruck führen" und "nicht verwendet" zugeordnet ist, wobei dieser jeweilige Druckmittelkanal (58 - 75; 118) gegenüber einer Wahl eines anderen Einsatzes (2 - 2"") aus dem Satz von Einsätzen (2 - 2"") aufgrund der Ausbildung des Gehäuses (8) und aufgrund der gegenüber der Ausbildung dieses anderen Einsatzes (2 - 2"") anderen Ausbildung des tatsächlich gewählten Einsatzes jeweils einer anderen Funktion aus dieser Gruppe zugeordnet ist.

3. Ventileinrichtung nach Anspruch 1 oder 2,
**dadurch gekennzeichnet, dass**
der Druckmittelweg wenigstens einen Druckmittelkanal (66 - 72), der ein Innenkanal ist, umfasst, wobei der Druckmittelweg beim ausgewählten Gehäuse (8) gegenüber der Wahl eines anderen Gehäuses (8) aus dem Satz von Gehäusen (8) und/oder beim ausgewählten Einsatz (2) gegenüber der Wahl eines anderen Einsatzes (2' - 2"") aus dem Satz von Einsätzen (2 - 2"") wenigstens einen anderen Innenkanal (66 - 72) umfasst.

4. Ventileinrichtung nach einem der vorherigen Ansprüche,
**dadurch gekennzeichnet, dass**
die Druckmittelkanäle (58 - 75; 118) mehrere zu Anschlüssen (16 - 16''') am Gehäuse geführte Anschlusskanäle (58 - 64) umfassen und der Druckmittelweg wenigstens zwei dieser Anschlusskanäle (58 - 64) umfasst, wobei der Druckmittelweg beim ausgewählten Gehäuse (8) gegenüber der Wahl eines anderen Gehäuses aus dem Satz von Gehäusen und/oder beim ausgewählten Einsatz (2) gegenüber der Wahl eines anderen Einsatzes aus dem Satz von Einsätzen wenigstens einen anderen Anschlusskanal (58 - 64) umfasst oder die Funktionen von wenigstens zwei vom Druckmittelweg umfassten Anschlusskanälen (58 - 64) untereinander vertauscht sind.

5. Ventileinrichtung nach einem der vorherigen Ansprüche,
**dadurch gekennzeichnet, dass**
das Relaisventil (17) in einem Gehäuseblock (10) des Gehäuses (8) angeordnet ist, wobei dieser Gehäuseblock (10) wenigstens zwei der Druckmittelkanäle (58 - 75) aufweist.

6. Ventileinrichtung nach einem der vorherigen Ansprüche,
**dadurch gekennzeichnet, dass**
das Gehäuse (8) einen Gehäuseblock (10) und einen Gehäusedeckel (12) umfasst, wobei der Gehäuseblock (10) unabhängig vom gewählten Einsatz (2) gegenüber einer Wahl eines beliebigen anderen Einsatzes (2' - 2"") aus dem Satz von Einsätzen (2 - 2"") entweder zwar unterschiedliche Druckmittelkanäle aufweist, ansonsten jedoch im Wesentlichen gleich ausgebildet ist oder gleiche Druckmittelkanäle aufweist und auch ansonsten identisch oder zumindest im Wesentlichen gleich ausgebildet ist und wobei der Einsatz (2) vom Gehäuseblock (10) und vom Gehäusedeckel (12) eingefasst am Gehäuse festgeklemmt ist.

7. Ventileinrichtung nach einem der vorherigen Ansprüche,
**dadurch gekennzeichnet, dass**
der Einsatz (2, 2"") eine Ventilpatrone (2'", 2"") oder ein Ventilblock (2, 2', 2") ist, wobei der Einsatz (2 - 2"") wenigstens ein Ventil (78, 88, 90, 98, 100), insbesondere Elektromagnetventil, aufweist, mittels dem der Druckmittelweg freischaltbar oder unterbrechbar ist.

8. Ventileinrichtung nach Anspruch 7,
**dadurch gekennzeichnet, dass**
der Einsatz (2) eine ausgehärtete Spritzmasse oder Gussmasse, insbesondere Kunststoffspritzmasse oder Kunststoffgussmasse, aufweist, die das Ventil (78, 88, 90, 98, 100) zumindest teilweise umgibt.

9. Ventileinrichtung nach Anspruch 7 oder 8,
**dadurch gekennzeichnet, dass**
der Einsatz (2) sich dadurch von wenigstens einem anderen, insbesondere dritten, Einsatz (2', 2", 2'", 2"") aus dem Satz von Einsätzen unterscheidet, dass er zwar wenigstens ein gleiches Ventil (78), jedoch wenigstens einen anderen Verbindungskanal (76, 80 - 86, 92 - 96, 102 - 112, 120 - 124), insbesondere andere Bohrung, im Einsatz (2) aufweist.

10. Ventileinrichtung nach einem der Ansprüche 7, 8 oder 9,
**dadurch gekennzeichnet, dass**
der Einsatz (2) sich dadurch von wenigstens einem anderen, insbesondere dritten, Einsatz (2', 2", 2'", 2"") des Satzes von Einsätzen (2 - 2"") unterscheidet, dass er zwar gleiche Verbindungskanäle (76, 80 - 86, 92 - 96, 102 - 112, 120 - 124), insbesondere Bohrungen, im Einsatz, jedoch wenigstens ein anderes Ventil (78, 88, 90, 98, 100) aufweist.

11. Ventileinrichtung nach einem der vorherigen Ansprüche,
**dadurch gekennzeichnet, dass**
diese Ventileinrichtung (1 - 1'") in Abhängigkeit vom ausgewählten Gehäuse (8) und/oder in Abhängigkeit vom ausgewählten Einsatz (2 - 2"") eine Einrichtung aus der Gruppe Relaismodulatoreinrichtung für eine elektropneumatische Feststellbremse, Relaismodulatoreinrichtung für ein elektronisch geregeltes Bremssystem, Relaismodulator für ein pneumatisches Bremssystem mit Antiblockiersystem und/oder Antriebsschlupfregelung, Elektromagnetrelaisventileinrichtung, Relaisventileinrichtung ist, wobei diese Ventileinrichtung (1 - 1'") gegenüber der Wahl eines anderen Gehäuses (8) und/oder gegenüber der Wahl eines anderen Einsatzes (2 - 2"") eine andere Einrichtung aus dieser Gruppe ist.

12. Ventileinrichtung nach einem der vorherigen Ansprüchen,
**dadurch gekennzeichnet, dass**
das Gehäuse (8) mit den Anschlusskanälen (58 - 64) verbundene Anschlüsse (16 - 16'") zur Verbindung mit einem Druckluftvorrat (44), mit einer Entlüftung (52), mit einem Steuerdruck oder Redundanzdruck, insbesondere einer Bremspedaleinrichtung (54), und mit wenigstens einem Bremszylinder (48) aufweist.

13. Ventileinrichtung nach einem der vorherigen Ansprüche,
**dadurch gekennzeichnet, dass**
das Gehäuse (8) zumindest überwiegend ein Leichtmetall, insbesondere Aluminium, als Material aufweist und die Druckmittelkanäle (58 - 75) zumindest teilweise durch Bohrungen im Gehäuse (8) gebildet sind.

14. Bremsanlage zum Abbremsen oder Feststellen eines Fahrzeugs mittels druckmittelbetriebener Bremszylinder (48, 182, 192, 194) mit einer Ventileinrichtung (1 - 1'") nach einem der Ansprüche 1 bis 13 zur Bremssteuerung dieser Bremsanlage (130).

15. Fahrzeug, insbesondere Nutzfahrzeug, mit einer Ventileinrichtung (1 - 1'") nach einem der Ansprüche 1 bis 13 zur Bremssteuerung einer Bremsanlage (130) dieses Fahrzeugs und/oder mit einer Bremsanlage (130) nach Anspruch 14 zum Abbremsen oder Feststellen dieses Fahrzeugs.

## Claims

1. Valve device (1) for brake control of a pressure-medium-operated brake system (130) of a vehicle,
having a housing (8) which has a plurality of pressure medium ducts (58 - 75; 118),
having a relay valve (17) which provides a pneumatic control pressure, which is conducted to said relay valve (17) through at least one of the pressure medium ducts (58 - 75; 118), at a higher pressure medium flow rate,
and having at least one insert (2), in particular valve block, which is pneumatically connected to at least two pressure medium ducts (58, 66),
wherein said two pressure medium ducts (58, 66) are or can be pneumatically connected to one another by means of a pneumatic connection through said insert (2),
and wherein at least said two pressure medium ducts (58, 66) which are or can be connected to one another, and the pneumatic connection or connection facility thereof through the insert (2), together define a pressure medium path,
**characterized in that**,
the housing (8) is selectable from a set of substantially identical housings with different pressure medium ducts, and the one or more inserts (2) is or are selectable from a set of inserts which are externally of substantially identical form but which have different air guides,
on the basis of the respectively selected housing (8), the pressure medium path runs differently depending on said respectively selected housing (8), and/or,
on the basis of the respectively selected insert (2), the pressure medium path is or can be connected differently depending on said respectively selected insert (2 - 2""), and
the valve device receives a corresponding function in a manner dependent on the selected housing (8) and/or in a manner dependent on the selected insert (2).

2. Valve device according to Claim 1,
**characterized in that**
at least one of the pressure medium ducts (58 - 75; 118) in the case of the selected insert (2) is assigned in each case one function from the group "aeration", "ventilation", "conduct control pressure or redundancy pressure", "conduct brake pressure", and "not used", wherein said respective pressure medium duct (58 - 75; 118) is assigned a different function from said group in each case in relation to a selection of a different insert (2 - 2"") from the set of inserts (2 - 2""), owing to the design of the housing (8) and owing to the design of the actually selected insert which is different to the design of said other insert (2 - 2"").

3. Valve device according to Claim 1 or 2,
**characterized in that**
the pressure medium path comprises at least one pressure medium duct (66 - 72) which is an internal duct, wherein the pressure medium path comprises at least a different internal duct (66 - 72) in the case of the selected housing (8) in relation to the selection of a different housing (8) from the set of housings (8) and/or in the case of the selected insert (2) in relation to the selection of a different insert (2' - 2"") from the set of inserts (2 - 2"").

4. Valve device according to one of the preceding claims,
**characterized in that**
the pressure medium ducts (58 - 75; 118) comprise a plurality of port ducts (58 - 64) which lead to ports (16 - 16'") on the housing, and the pressure medium path comprises at least two of said port ducts (58 - 64), wherein the pressure medium path comprises at least one different port duct (58 - 64), or the function of at least two port ducts (58 - 64) comprised by the pressure medium path are interchanged with one another, in the case of the selected housing (8) in relation to the selection of a different housing from the set of housings and/or in the case of the selected insert (2) in relation to the selection of a different insert from the set of inserts.

5. Valve device according to one of the preceding claims,
**characterized in that**
the relay valve (17) is arranged in a housing block (10) of the housing (8), wherein said housing block (10) has at least two of the pressure medium ducts (58 - 75).

6. Valve device according to one of the preceding claims,
**characterized in that**
the housing (8) comprises a housing block (10) and a housing cover (12), wherein the housing block (10) either has different pressure medium ducts but is otherwise of substantially identical design, or has identical pressure medium ducts and is also otherwise of identical or at least substantially identical design, independently of the selected insert (2) in relation to the selection of any other insert (2' - 2"") from the set of inserts (2 - 2""), and wherein the insert (2) is surrounded, and clamped to the housing, by the housing block (10) and by the housing cover (12).

7. Valve device according to one of the preceding claims,
**characterized in that**
the insert (2, 2"") is a valve cartridge (2'", 2"") or a valve block (2, 2', 2"), wherein the insert (2 - 2"") has at least one valve (78, 88, 90, 98, 100), in particular an electromagnetic valve, by means of which the pressure medium path can be opened up or blocked.

8. Valve device according to Claim 7,
**characterized in that**
the insert (2) has a hardened injection-molded compound or cast compound, in particular plastic injection-molded compound or cast compound, which at least partially surrounds the valve (78, 88, 90, 98, 100).

9. Valve device according to Claim 7 or 8,
**characterized in that**
the insert (2) differs from at least one other, in particular third, insert (2', 2", 2'", 2"") from the set of inserts **in that** it has at least one identical valve (78) but has at least one different connecting duct (76, 80 - 86, 92 - 96, 102 - 112, 120 - 124), in particular a different bore, in the insert (2).

10. Valve device according to one of Claims 7, 8 or 9,
**characterized in that**
the insert (2) differs from at least one other, in particular third, insert (2', 2", 2'", 2"") of the set of inserts (2 - 2"") **in that** it has identical connecting ducts (76, 80 - 86, 92 - 96, 102 - 112, 120 - 124), in particular bores, in the insert, but has at least one different valve (78, 88, 90, 98, 100).

11. Valve device according to one of the preceding claims,
**characterized in that**
said valve device (1 - 1'") is, depending on the selected housing (8) and/or depending on the selected insert (2 - 2""), a device from the group comprising relay modulator device for an electropneumatic parking brake, relay modulator device for an electronically regulated brake system, relay modulator for a pneumatic brake system with anti-lock system and/or traction control, electromagnetic relay valve device, relay valve device, wherein said valve device (1 - 1'") is a different device from said group in relation to the selection of a different housing (8) and/or in relation to the selection of a different insert (2 - 2"").

12. Valve device according to one of the preceding claims,
**characterized in that**
the housing (8) has ports (16 - 16'"), which are connected to the port ducts (58 - 64), for connecting to a compressed-air reservoir (44), to a vent (52), to a control pressure or redundancy pressure, in particular a brake pedal device (54), and to at least one brake cylinder (48).

13. Valve device according to one of the preceding claims,
**characterized in that**
the housing (8) has at least predominantly a light metal, in particular aluminum, as material, and the pressure medium ducts (58 - 75) are formed at least partially by bores in the housing (8).

14. Brake system for braking or immobilizing a vehicle by means of pressure-medium-operated brake cylinders (48, 182, 192, 194), having a valve device (1 - 1'") according to one of Claims 1 to 13 for the brake control of said brake system (130).

15. Vehicle, in particular utility vehicle, having a valve device (1 - 1'") according to one of claims 1 to 13 of the brake control of a brake system (130) of said vehicle, and/or having a brake system (130) according to Claim 14 for braking or immobilizing said vehicle.

## Revendications

1. Dispositif de valves (1) pour la commande du freinage d'un système de freinage opérant avec un fluide sous pression (130) d'un véhicule,
avec un corps (8), qui présente plusieurs canaux de fluide sous pression (58-75; 118),
avec une valve relais (17), qui fournit avec un plus grand débit de fluide sous pression une pression de commande pneumatique, qui est envoyée à cette valve relais (17) par au moins un des canaux de fluide sous pression (58-75; 118), et
avec au moins un insert (2), en particulier un bloc de valve, qui est relié de façon pneumatique à au moins deux canaux de fluide sous pression (58, 66),
dans lequel ces deux canaux de fluide sous pression (58, 66) sont ou peuvent être reliés de façon pneumatique l'un à l'autre au moyen d'une liaison pneumatique à travers cet insert (2), et
dans lequel au moins ces deux canaux de fluide sous pression (58, 66) qui sont ou peuvent être reliés l'un à l'autre et leur liaison pneumatique ou leur possibilité de liaison à travers l'insert (2) définissent ensemble un chemin de fluide sous pression, **caractérisé en ce que**
le corps (8) peut être choisi parmi un ensemble de corps essentiellement identiques munis de canaux de fluide sous pression différents et le ou les insert(s) (2) peut ou peuvent être choisi(s) parmi un ensemble d'inserts de forme extérieure essentiellement identique, mais avec des passages d'air différents,
le chemin de fluide sous pression se présente de façon différente en raison du corps respectivement choisi (8) en fonction de ce corps respectivement choisi (8), et/ou le chemin de fluide sous pression est ou peut être connecté différemment en raison de l'insert respectivement choisi (2) en fonction de cet insert respectivement choisi (2-2""), et
le dispositif de valves contient une fonction correspondante en fonction du corps choisi (8) et/ou en fonction de l'insert choisi (2).

2. Dispositif de valves selon la revendication 1, **caractérisé en ce qu'**au moins un des canaux de fluide sous pression (58-75; 118) est associé dans le cas de l'insert choisi (2) respectivement à une des fonctions du groupe "admission d'air", "purge d'air", "transmettre pression de commande ou pression redondante", "transmettre pression de freinage" et "non utilisé", dans lequel ce canal de fluide sous pression respectif (58-75; 118) est respectivement associé à une autre fonction de ce groupe par rapport à un choix d'un autre insert (2-2"") parmi l'ensemble d'inserts (2-2"") en raison de la configuration du corps (8) et en raison de l'autre configuration de l'insert effectivement choisi par rapport à la configuration de cet autre insert (2-2"").

3. Dispositif de valves selon la revendication 1 ou 2, **caractérisé en ce que** le chemin de fluide sous pression comprend au moins un canal de fluide sous pression (66-72), qui est un canal intérieur, dans lequel le chemin de fluide sous pression comprend au moins un autre canal intérieur (66-72) avec le corps choisi (8) par rapport au choix d'un autre corps (8) parmi l'ensemble de corps (8) et/ou avec l'insert choisi (2) par rapport au choix d'un autre insert (2'-2"") parmi l'ensemble d'inserts (2-2"").

4. Dispositif de valves selon l'une quelconque des revendications précédentes, **caractérisé en ce que** les canaux de fluide sous pression (58-75; 118) comprennent plusieurs canaux de raccordement (58-64) conduits à des raccords (16-16'") sur le corps et le chemin de fluide sous pression comprend au moins un autre canal de raccordement (58-64) avec le corps choisi (8) par rapport au choix d'un autre corps parmi l'ensemble de corps et/ou avec l'insert choisi (2) par rapport au choix d'un autre insert parmi l'ensemble d'inserts ou les fonctions d'au moins deux canaux de raccordement (58-64) compris dans le chemin de fluide sous pression sont échangées entre elles.

5. Dispositif de valves selon l'une quelconque des revendications précédentes, **caractérisé en ce que** la valve relais (17) est disposée dans un bloc de corps (10) du corps (8), dans lequel ce bloc de corps (10) présente au moins deux des canaux de fluide sous pression (58-75).

6. Dispositif de valves selon l'une quelconque des revendications précédentes, **caractérisé en ce que** le corps (8) comprend un bloc de corps (10) et un couvercle de corps (12), dans lequel le bloc de corps (10) soit présente, indépendamment de l'insert choisi (2) par rapport à un choix d'un quelconque autre insert (2'-2"") parmi l'ensemble d'inserts (2-2""), des canaux de fluide sous pression certes différents, mais est par ailleurs configuré de façon essentiellement identique, soit présente des canaux de fluide sous pression identiques et est aussi par ailleurs configuré de façon identique ou au moins essentiellement identique et dans lequel l'insert (2) est solidement serré sur le corps de façon coincée par le bloc de corps (10) et par le couvercle de corps (12).

7. Dispositif de valves selon l'une quelconque des revendications précédentes, **caractérisé en ce que** l'insert (2, 2"") est une cartouche de valve (2'", 2"") ou un bloc de valve (2, 2', 2"), dans lequel l'insert (2-2"") présente au moins une valve (78, 88, 90, 98, 100), en particulier une valve électromagnétique, au moyen de laquelle le chemin de fluide sous pression peut être libéré ou interrompu.

8. Dispositif de valves selon la revendication 7, **caractérisé en ce que** l'insert (2) présente une masse injectée ou une masse coulée durcie, en particulier une masse injectée en matière plastique ou une masse coulée en matière plastique, qui entoure au moins en partie la valve (78, 88, 90, 98, 100).

9. Dispositif de valves selon la revendication 7 ou 8, **caractérisé en ce que** l'insert (2) se distingue d'au moins un autre, en particulier un troisième insert (2', 2", 2'", 2"") parmi l'ensemble d'inserts, **en ce qu'**il présente certes au moins une valve identique (78) mais qu'il présente au moins un autre canal de liaison (76, 80-86, 92-96, 102-112, 120-124), en particulier un autre forage, dans l'insert (2).

10. Dispositif de valves selon l'une quelconque des revendications 7, 8 ou 9, **caractérisé en ce que** l'insert (2) se distingue d'au moins un autre, en particulier un troisième insert (2', 2", 2'", 2"") de l'ensemble d'inserts (2-2""), **en ce qu'**il présente certes des canaux de liaison identiques (76, 80-86, 92-96, 102-112, 120-124), en particulier des forages, dans l'insert, mais qu'il présente au moins une autre valve (78, 88, 90, 98, 100).

11. Dispositif de valves selon l'une quelconque des revendications précédentes, **caractérisé en ce que** ce dispositif de valves (1-1'") est, en fonction du corps choisi (8) et/ou en fonction de l'insert choisi (2-2""), un dispositif du groupe composé d'un dispositif de modulateur relais pour un frein de stationnement électropneumatique, un dispositif de modulateur relais pour un système de freinage à régulation électronique, un modulateur relais pour un système de freinage pneumatique avec un système antiblocage et/ou une régulation du patinage de l'entraînement, un dispositif de valve relais électromagnétique, un dispositif de valve relais, dans lequel ce dispositif de valves (1-1'") est un autre dispositif de ce groupe par rapport au choix d'un autre corps (8) et/ou par rapport au choix d'un autre insert (2-2"").

12. Dispositif de valves selon l'une quelconque des revendications précédentes, **caractérisé en ce que** le corps (8) présente des raccords (16-16'") connectés aux canaux de raccordement (58-64) pour la liaison avec un réservoir d'air comprimé (44), avec un évent (52), avec une pression de commande ou une pression redondante, en particulier un dispositif de pédale de frein (54), et avec au moins un cylindre de freinage (48).

13. Dispositif de valves selon l'une quelconque des revendications précédentes, **caractérisé en ce que** le corps (8) présente comme matériau au moins principalement un métal léger, en particulier de l'aluminium, et les canaux de fluide sous pression (58-75) sont formés au moins en partie par des forages dans le corps (8).

14. Système de freinage pour le freinage ou l'immobilisation d'un véhicule au moyen de cylindres de frein (48, 182, 192, 194) opérant avec un fluide sous pression avec un dispositif de valves (1-1'") selon l'une quelconque des revendications 1 à 13 pour la commande du freinage de ce système de freinage (130).

15. Véhicule, en particulier véhicule utilitaire, avec un dispositif de valves (1-1'") selon l'une quelconque des revendications 1 à 13 pour la commande du freinage d'un système de freinage (130) de ce véhicule et/ou avec un système de freinage (130) selon la revendication 14 pour le freinage ou l'immobilisation de ce véhicule.
